## Europäisches Patentamt

(19) **European Patent Office**

**Office européen des brevets**

(11) Publication number: **0 241 869**
**B1**

(12) ## EUROPEAN PATENT SPECIFICATION

(45) Date of publication of the patent specification:
**07.11.90**

(51) Int. Cl.⁵: **F02B 23/06**

(21) Application number: **87105282.5**

(22) Date of filing: **09.04.87**

(54) Combustion chamber for internal combustion engines.

(30) Priority: **12.04.86 JP 83231/86**

(43) Date of publication of application:
**21.10.87 Bulletin 87/43**

(45) Publication of the grant of the patent:
**07.11.90 Bulletin 90/45**

(84) Designated Contracting States:
**DE FR GB**

(56) References cited:
**BE-A- 551 993**
**DE-A- 1 401 956**
**DE-C- 865 683**
**GB-A- 2 164 701**
**US-A- 2 873 727**

(73) Proprietor: **Isuzu Motors Limited,**
**10-go, 22-ban, 6-chome, Minami-Ohi Shinagawa-ku,**
**Tokyo(JP)**

(72) Inventor: **Hideo Kawamura c/o Fujisawa Factory, Isuzu**
**Motors Limited 8, Tsuchidana, Fujisawa-shi,**
**Kanagawa(JP)**

(74) Representative: **Schaumburg, Thoenes & Englaender,**
**Mauerkircherstrasse 31 Postfach 86 07 48,**
**D-8000 München 86(DE)**

ACTORUM AG

## Description

The present invention relates to a combustion chamber for internal combustion engines. More specifically, it involves arrangements for internal combustion engine combustion chambers which not only satisfy the demand for high fuel economy and high power output, achieved by controlling the amount of fuel film which adheres onto the inner wall of the combustion chamber, but which also decrease the production of white fumes and $NO_x$.

Among the diesel engines that attempt to achieve high efficiency combustion by directly injecting fuel into the combustion chamber, there are the MAN-M type engines, shown in Fig. 3, and the multi-jet type diesel engines, shown in Figs. 4 and 5.

In the MAN-M type engines, while a swirl S is generated in the combustion chamber b, which is deeply recessed in the piston head part $\underline{a}$ forming a spherical cavity, fuel mist $F_1$ is injected thereinto from a fuel injection nozzle c so that it adheres onto the combustion chamber b in the form of a fuel film. The wall evaporation rate of said fuel film is controlled by the swirl S.

Thus, the MAN-M method promotes the mixing of air and fuel and combustion thereof by collecting the fuel as it evaporates outside of the swirl S, and it is capable of lowering the combustion temperature, thereby achieving low emissions of $NO_x$ and noises. However, this method has the disadvantage that when it comes to cold-starting or idling the engine at very cold environmental temperatures, large amounts of bluish white fumes and HC are exhausted. Under such conditions favorable wall evaporation cannot be achieved because the temperatures of the combustion chamber wall and of the combustion air are both low.

This happens because the combustion chamber b is not quickly heated to such a temperature as to allow the fuel to evaporate and be ignited, and the fuel mist $F_1$, which has a strong penetration due to the sole nozzle hole, further lowers the temperature of the combustion chamber wall and thus greatly limits the ability of the fuel to evaporate. Consequently, the amount of evaporated fuel is insufficient compared to the volume of the combustion chamber b, and as the evaporated fuel is stirred by the swirl S, the concentration of the air-fuel mixture gas (referred to as 'mixture gas' hereinafter) within the combustion chamber b becomes too lean to promote combustion.

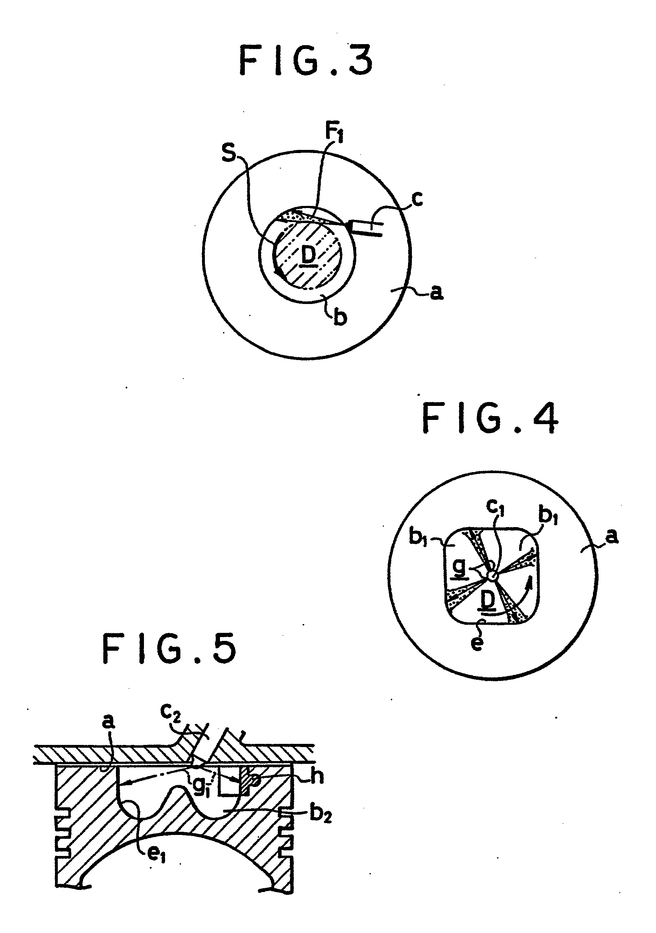

In Proposal A for the combustion chamber of multi-jet type diesel engine, shown in Fig. 4, nozzle holes g of a fuel injection nozzle $c_1$ are disposed in the combustion chamber $b_1$ of a piston head part $\underline{a}$ respectively facing the inner walls e, which are arranged so as to divide the circumference of the combustion chamber $b_1$ more or less equally.

This proposal attempts to achieve a combustion of high output and low fuel consumption rate through producing a premixed gas of good ignitability and combustability by uniformly dispersing the fuel mist in the combustion chamber $b_1$. However, this method has the disadvantage that, since the penetration of the fuel mist for a given strength of swirl becomes weaker as the number of the nozzle holes increases, most of the fuel mist is mixed with that part of the air which is distributed in the forced flow D of the swirl S, namely the air present in the vicinity of the center of the combustion chamber $b_1$, resulting in the formation of a rich premixed gas in that area. This happens because the swirl S tends to converge toward the center away from the peripheral walls of the combustion chamber $b_1$ on account of the relative configuration of the diameter of the cylinder (not shown) and the diameter of the opening of the combustion chamber $b_1$. Therefore, the combustion mode is such that ignition takes place in the vicinity of the combustion chamber center, from which the flame propagates rapidly.

Although this is advantageous with respect to power output and fuel economy, the problem still remains that a rapid rise, both in the combustion peak temperature and the cylinder pressure, leads to an increase in $NO_x$ and combustion noises.

In Proposal B for the multi-jet type diesel engine combustion chamber (Japanese Utility Model Lay Open Print no. 42 119/82), shown in Fig. 5, a fuel injection nozzle $c_2$ is disposed so as to eccentrically face the center of the combustion chamber $b_2$, with a plurality of nozzle holes $g_1$ so disposed that each of the nozzle holes $g_1$ faces an inner wall $e_1$ of the combustion chamber $b_2$, and a low thermal conductivity material h is attached to that part of the wall $e_1$ which is on the closer side in terms of the distance between the nozzle hole $g_1$ and the wall $e_1$.

The object of Proposal B, as described above, is to provide fuel mist to the inner wall of the eccentric side by eccentrically orienting the fuel injection nozzle with respect to the combustion chamber center, and at the same time to evaporate the fuel mist by means of the low thermal conductivity member h.

Thus, in Proposal B, premixed gas is formed at both the inner and outer sides of the swirl S, but there is the problem that, owing to the eccentrically oriented injection direction, the fuel mist from the nozzle hole, located at the opposite side of the eccentricity, has to travel longer resulting in weakened penetration so that most of the fuel mist is distributed and vaporized in the inner side of the swirl or in the central area of the combustion chamber $b_2$. This means that richer premixed gas is generated in the vicinity of the combustion chamber center as in the case of Proposal A.

In another proposal, the inner wall of the combustion chamber is entirely covered with a low thermal conductivity member so as to improve adiabatic efficiency. However, such an arrangement is unfavorable because it creates problems. For example, the intake air is inordinately heated up due to the improved adiabatic character, which results in decreased suction efficiency, or the fuel is untimely ignited before it is gasified to form a proper mixture gas.

From DE-C 865 683 a combustion chamber arrangement is known, in which the fuel mists impinge directly upon the walls of the combustion chamber.

The fuel is vaporized by the heat of the walls and by the swirl. When starting up an engine, these walls are cold so that the evaporation of the fuel is reduced which results in an unfavourable cold-start behaviour of the combustion engine at cold ambient temperature.

The object of the present invention is to provide a combustion chamber for internal combustion engines which is capable of attaining the following goals:

(1) To improve output performance and fuel consumption in all load conditions including the starting-up of an engine; and

(2) to carry out fuel evaporation and combustion while suppressing the production of unburnt matters, such as HC and white smokes, and combustion noises and vibrations.

The aforementioned goals are attained through the features of the main claim. Further embodiments are given in the subclaims.

In order to describe the effects achieved by these arrangements, it must first be explained that each of the fuel mists, thus supplied and atomized by each of the nozzle holes of the fuel injection nozzle means, is in part further pulverized upon collision with the combustion chamber inner wall and evaporates instantaneously. In the meantime, the rest forms a fuel film of uniform thickness that spreads itself over a wide area while flowing along the inner wall of the combustion chamber in the direction of the swirl as well as in the depth direction of the combustion chamber.

The heat from the compressed air and from the inner wall quickly evaporates this fuel film at its outer surface. The fuel vapor thus generated is burned as it mixes with the air outside of the mainstream of the swirl ( called 'swirl's natural flow' hereinafter ). Evaporation of said fuel film is promoted upon combustion and combustion takes place by flame propagation.

Unlike the conventional arrangement where the fuel is distributed in the area of the swirl's natural flow and on the combustion chamber wall as a consequence of only one nozzle hole being provided, the fuel in the present invention is distributed in the form of mist or vapor positively in the area of the swirl's natural flow by providing a plurality of nozzle holes so as to increase the injection rate and to prevent the fuel mist from passing through the swirl's forced flow. Owing to this arrangement, a combustion is achieved that ensures superior power output and fuel economy while at the same time decreasing the production of white fumes, $NO_x$ and HC.

The invention will be further described with reference to the drawings in which

Fig. I is a schematic, vertical, cross-sectional view showing a preferred embodiment of the combustion chamber for internal combustion engines;

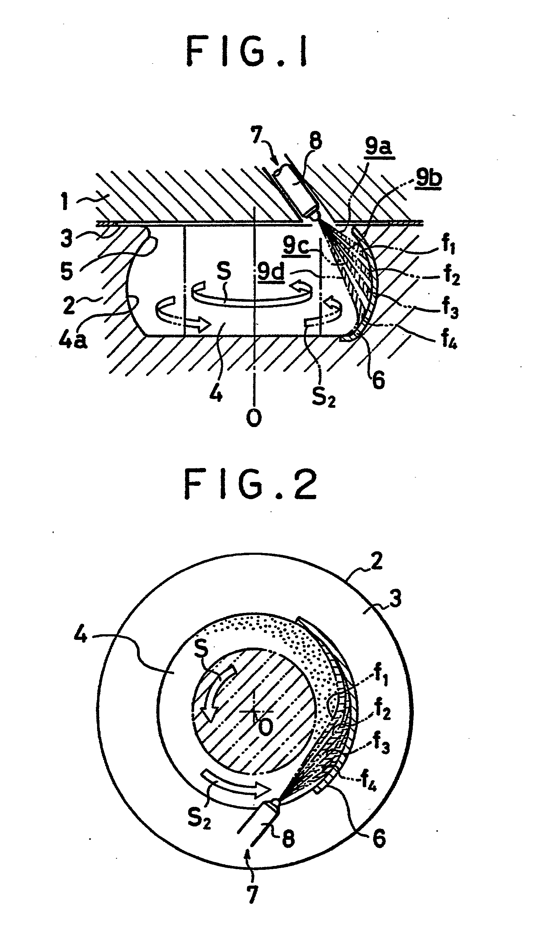

Fig. 2 is a plan view of Fig. I;

Fig. 3. is a plan view illustrating the MAN-M type engine combustion chamber;

Fig. 4 is a plan view illustrating the multi-jet type diesel engine combustion chamber (Proposal A) of the prior art; and

Fig. 5 is a vertical cross-sectional view illustrating the multiple-jet type diesel engine combustion chamber according to the prior art (Proposal B).

In Fig. I, the numeral I denotes a cylinder head, and 2 a piston. As shown in the figure, in the piston head portion 3 of the piston 2, a combustion chamber 4 is formed deeply recessed in the axial direction with the top surface of the piston head 3 as a reference plane in such a manner that a vertical section of said combustion chamber 4 is a circle truncated both at the top and the bottom ends. Consequentially, a lip member 5 is formed at the top opening of the combustion chamber 4 in such a way that it appropriately protrudes radially and inwardly along the periphery of said opening.

It should be remembered that the aim of this invention is to attain high efficiency combustion with respect to power output and fuel economy while suppressing the production of HC, bluish white fumes and $NO_x$ for all loading conditions including starting-up of the engine.

For these purposes, a thermal insulation member 6 and a fuel injection nozzle 7 are are provided in the aforementioned combustion chamber 4 in a mutual relationship such as follows:

The fuel injection nozzle 7 is constructed in such a manner so that it contains in its nozzle body 8 a needle valve (not shown), which is capable of free back-and-forth motion with respect to the valve seat (not shown) provided in said nozzle body 8, and that it forms at the tip of the body 8 a plurality of nozzle holes 9a, 9b, 9c, 9d which are opened as said needle valve is lifted.

Each of the nozzle holes 9a, 9b, 9c, 9d is so disposed as to face the inner wall 4a of the combustion chamber 4, with each of the nozzle holes 9a, 9b, 9c, 9d facing the downstream of the swirl S at given intervals as well as facing the combustion chamber depth at given intervals. Here, not only the nozzle holes 9a, 9b, 9c, 9d are disposed so that their distances to the inner wall 4a are approximately equal, but also their diameters are set so that the diameter of the nozzle hole 9a which faces the topmost portion of the inner wall 4a is the smallest, with the diameters of other jet nozzles 9b, 9c, 9d becoming progressively larger with increasing depth.

Owing to this arrangement, the fuel mists $f_1$, $f_2$, $f_3$, $f_4$, which are injected respectively from nozzle holes 9a, 9b, 9c, 9d so as to impinge upon the inner wall 4a of the combustion chamber 4, are further pulverized by this collision and, in the meantime, form uniformly thick fuel films of differing diffusion areas in accordance with the diameters of the injection nozzle holes 9a, 9b, 9c, 9d; the larger the jet nozzle diameter, the larger the diffusion area. Thus, these fuel films flow spreading themselves in the direction of the swirl as well as in the direction of depth.

As a consequence thereof, these fuel films are each formed on the inner wall 4a adhering thereonto covering it widely and with uniform thickness so that the inner wall 4a is protected from being excessively cooled by evaporation of the fuel and is maintained at a temperature above the designated temperature.

With respect to the thermal insulation layer member 6, which is provided in order to stabilize the temperatures of the inner walls 4a facing the nozzle holes 9a, 9b, 9c, 9d, said thermal insulation layer 6 is integrally formed with said inner walls 4a, having an area that is large enough and has a sufficient margin to cover the area of the fuel film, which is formed following the collision of fuel mists $f_1$, $f_2$, $f_3$, $f_4$ coming from the nozzle holes 9a, 9b, 9c, 9d spreading itself in the directions of swirl S and of the combustion chamber depth.

Though a ceramic material is used in this embodiment, any material having a heat resistive, corrosion resistive, and high thermal insulation property may be used. As for the forming method of said thermal insulation layer 6, a strip may be press-formed to adapt to the shape of the combustion chamber 4 and be soldered, welded, or cast-inserted to the inner wall 4a, or layered up into the desired form by a spray coating method.

The functions of the internal combustion engine combustion chamber of this invention are now described referring to the attached drawings.

As shown in Figs. I and 2, the high temperature compressed air generated by compression effected by piston 2 heats up the thermal insulation layer member 6 to a temperature above the fuel evaporation temperature quickly even when starting the engine at very cold environmental temperatures. Therefore, the fuel mists $f_1$, $f_2$, $f_3$, $f_4$ that are injected toward the insulation layer member 6 from nozzle holes 9a, 9b, 9c, 9d of the fuel injection nozzle 7 are in part further pulverized upon collision with the insulation layer member 6 and evaporate while flowing toward the downstream and outside of swirl S, namely into the natural flow $S_2$ of the swirl S. In the meantime, the remains of the fuel mists $f_1$, $f_2$, $f_3$, $f_4$ adhere onto the combustion chamber inner wall 4a in the form of a fuel film that evaporates while flowing in the directions of swirl S and of the combustion chamber 4 depth. As the travel distances of fuel mists $f_1$, $f_2$, $f_3$, $f_4$ are approximately equal to each other, the diffusion area of each fuel mist $f_1$, $f_2$, $f_3$, $f_4$ is proportional to the diameter of the nozzle hole 9a, 9b, 9c, 9d from which it was injected, so that the fuel film is more narrowly formed in the upper part of the combustion chamber 4, widening in the direction of depth thereof.

Therefore, each fuel film in the combustion chamber 4 is vaporized quickly from its outer surface by the heat of the thermal insulation layer member 6 and the compressed air, and is then ignited and burned on mixing with air together with the aforesaid part of the fuel which has been pulverized and evaporated, while flowing on the swirl's natural flow $S_2$ in the swirl downstream direction.

As the combustion energy thus liberated promotes the evaporation of the fuel film, the evaporated fuel spreads gradually and steadily outside the swirl (the swirl's natural flow $S_2$), and a gradual combustion is achieved. Therefore, not only a comparatively fast combustion of good power output and fuel economy accompanied by low $NO_x$ and low noises, as compared with those of the conventional MAN-M type engines, is realized, but an effective wall evaporation and combustion while suppressing exhaust of white smokes and HC is ensured as well even when starting the engine in a cold environment. This can be achieved because the temperature of the inner walls of the combustion chamber 4 is not greatly lowered by the colliding fuel mists $f_1$, $f_2$, $f_3$, $f_4$.

## Claims

1. A combustion chamber arrangement in an internal combustion engine comprising a combustion chamber (4) which is provided in the head portion (3) of a piston (2) in the form of a cavity recessed in the axial direction, means for generating a swirl (S) in said cavity, and a fuel injection nozzle (7) which is disposed eccentrically in said combustion chamber (4) with respect to the combustion chamber axis (0) when the piston (2) is in the region of its top dead center and has nozzle holes (9a, 9b, 9c, 9d) for injecting fuel in the form of a plurality of closely spaced fuel mists ($f_1$, $f_2$, $f_3$, $f_4$) in the downstream direction of the swirl (S) and along the inner wall (4a) of said combustion chamber (4) in its depth direction, characterized in that the diameters of the nozzle holes (9a, 9b, 9c, 9d) become progressively larger with increasing distance of the nozzle holes (9a, 9b, 9c, 9d) from that point of the nozzle (7) facing the topmost portion of the cavity when the piston (2) is in the region of its top dead center, and in that a thermal insulation member (6) is attached to that part of said inner wall (4a) onto which the fuel adheres when it is atomized and supplied by the fuel injection nozzle (7).

2. The combustion chamber arrangement of claim 1, wherein the inner wall (4a) of said combustion chamber (4) is spherically recessed in the radial and outward direction in such a manner as to form a lip member (5) radially and along the upper opening periphery of said combustion chamber (4).

3. The combustion chamber arrangement of claim 2, wherein the thermal insulation member (6) is formed into the shape of a plate from a heat resisting and corrosion resisting material such as ceramic and is attached to the constitute chamber inner inner wall (4a) so as to constitute the same curved surface therewith.

## Patentansprüche

1. Verbrennungskammeranordnung in einer Brennkraftmaschine, mit einer Verbrennungskammer (4) im Kopfteil (3) eines Kolbens (2) in Form eines in axialer Richtung eingelassenen Hohlraums, mit Mitteln zum Erzeugen eines Wirbels (S) in dem Hohlraum und mit einer Kraftstoffeinspritzdüse (7), die in der Verbrennungskammer (4) exzentrisch zu deren Achse (0) angeordnet ist, wenn der Kolben (2) im Bereich seines oberen Totpunktes ist, und die Düsenöffnungen (9a, 9b, 9c, 9d) hat zum Einspritzen von Kraftstoff in Form einer Vielzahl eng benachbarter Kraftstoff-Sprühnebel ($f_1$, $f_2$, $f_3$, $f_4$) in Strömungsrichtung des Wirbels (S) und längs der Innenwand (4a) der Verbrennungskammer (4) in Richtung ihrer Tiefe, dadurch gekennzeichnet, daß die Durchmesser der Düsenöffnungen (9a, 9b, 9c, 9d) mit zunehmendem Abstand gegenüber dem Punkt der Kraftstoffeinspritzdüse (7), der dem obersten Teil des Hohlraums gegenüberliegt, wenn der Kolben (2) im Bereich seines oberen Totpunkts ist, zunehmend größer werden, und daß ein Wärmeisolationselement (6) an dem Teil der Innenwand (4a) befestigt ist, an dem der Kraftstoff anhaftet, wenn er zerstäubt und durch die Kraftstoffeinspritzdüse (7) zugeführt wird.

2. Anordnung nach Anspruch 1, dadurch gekennzeichnet, daß die Innenwand (4a) der Verbrennungskammer (4) radial nach außen kugelig eingelassen ist und eine Lippe (5) bildet, die längs des oberen Umfangs der Verbrennungskammer (4) radial vorsteht.

3. Anordnung nach Anspruch 2, dadurch gekennzeichnet, daß das Wärmeisolationselement (6) die Form einer Platte aus wärme- und korrosionsbeständigem Material wie z.B. Keramik hat und an der Innenwand (4a) der Verbrennungskammer (4) befestigt ist, so daß es mit dieser ein und dieselbe gekrümmte Fläche bildet.

**Revendications**

1. Arrangement d'une chambre de combustion dans un moteur à combustion interne comprenant une chambre de combustion (4) qui est réalisée dans la partie de tête (3) d'un piston (2) sous forme d'une cavité creusée en sens axial, un moyen pour créer un tourbillon (S) dans cette cavité, et une buse (7) d'injection de combustible qui est disposée excentriquement dans cette chambre de combustion (4) par rapport à l'axe (O) de la chambre de combustion quand le piston (2) est dans la région de son point mort haut et qui a des trous de buse (9a, 9b, 9c, 9d) pour l'injection de combustible sous forme d'une pluralité de brouillards de fines gouttelettes ($f_1$, $f_2$, $f_3$, $f_4$) de combustible étroitement proches dans le sens aval du tourbillon (S) et le long de la paroi intérieure (4a) de cette chambre de combustion (4) dans le sens de sa profondeur, caractérisée en ce que les diamètres des trous de buse (9a, 9b, 9c, 9d) deviennent progressivement plus grands avec la distance croissante de ces trous de buse (9a, 9b, 9c, 9d) à partir du point de la buse (7) faisant face à la partie la plus élevée de la cavité quand le piston (2) est dans la région de son point mort haut, et en ce qu'un élément (6) d'isolation thermique est attaché à cette partie de ladite paroi intérieure (4a) à laquelle le combustible adhère quand il est atomisé et fourni par la buse d'injection de combustible (7).

2. Arrangement d'une chambre de combustion selon la revendication 1 dans laquelle la paroi intérieure (4a) de la chambre de combustion (4) est creusée sphériquement en sens radial et extérieur de manière à former une lèvre (5), radialement et le long de la périphérie supérieure de l'ouverture de la chambre de combustion (4).

3. Arrangement d'une chambre de combustion selon la revendication 2 dans laquelle l'élément (6) d'isolation thermique est conforme au profil d'une plaque en une matière résistante à la chaleur et à la corrosion telle qu'une céramique et elle est attachée à la paroi intérieure (4a) de la chambre de combustion (4) pour constituer avec elle la même surface incurvée.

# F I G . 1

# F I G . 2

# FIG.3

# FIG.4

# FIG.5